# EUROPÄISCHE PATENTSCHRIFT

(11) **EP 0 506 214 B1**
(45) Veröffentlichungstag und Bekanntmachung des Hinweises auf die Patenterteilung: **13.09.1995**
(21) Anmeldenummer: 92250038.4
(22) Anmeldetag: 21.02.1992
(51) Int. Cl.: B60R 16/02

(54) **Verfahren zum Betrieb einer Multiplexsteuerung für das Bordnetz eines Kraftfahrzeuges**
Method for operating a multiplex-control for an on-board network for automotive-vehicle
Procédé de fonctionnement d'une commande de multiplexeur pour le réseau de bord d'une automobile

(30) Priorität: 27.03.1991 EP 91250087
(43) Veröffentlichungstag der Anmeldung: 30.09.1992
(73) Patentinhaber: SIEMENS AKTIENGESELLSCHAFT, 80333 München (DE)
(72) Erfinder: Elb, Jürgen, Dipl.-Ing., W-2890 Nordenham (DE); Schürmann, Bernhard, Dr.-Ing., W-2880 Brake (DE)

(56) Entgegenhaltungen:
- EP-A- 0 307 344
- EP-A- 0 413 123
- DE-A- 3 001 331
- DE-A- 3 508 417
- US-A- 4 700 344
- US-A- 4 745 596

## Beschreibung

Die Erfindung liegt auf dem Gebiet der Informationsübertragung und ist bei der Steuerung des Informationsaustausches zwischen den Stationen eines Multiplexsystems anzuwenden. Derartige Stationen, die über einen Datenbus miteinander verbunden sind, bestehen aus einem informationsverarbeitenden Teil, einer Übertragungssteuerung, einem Sendeteil und einem Empfangsteil. Der informationsverarbeitende Teil jeder Busstation enthält dabei eine Schaltungsanordnung, die Informationen logisch verknüpfen kann, z.B. einen Mikroprozessor. Mittels der Übertragungssteuerung werden die vom Prozessor an andere Busstationen ausgegebenen Informationen in ein für die Übertragung notwendiges, in einer Startphase mit einer Startinformation versehenes Format, z.B. ein Bitmuster aus Startbit, Prioritätsbits, Datenbits und Stopbit umgewandelt; weiterhin erfolgt dort die Prioritätssteuerung und es werden Informationen an den Prozessor geleitet. Mit Hilfe des Sendeteiles erfolgt die Ankopplung einer Busstation an das Übertragungsmedium, insbesondere einen elektrischen oder optischen Datenbus, um Informationen an andere Busstationen zu übergeben. Mit dem Empfangsteil erfolgt ebenfalls die Ankopplung einer Busstation an das Übertragungsmedium, in diesem Fall aber, um Informationen von anderen Busstationen zu empfangen. Beim Betrieb eines aus solchen Busstationen bestehenden Multiplexsystems hört die jeweils sendende Busstation über ihr Empfangsteil den Datenverkehr mit, um Datenkollisionen zu erkennen und um die Quittung für die Übertragung, die von den empfangenden Busstationen gesendet wird, zu empfangen (siehe z.B. die EP-A-0 307 344, die den Oberbegriff des Anspruchs 1 bildet, DE-Lehrbuch "Einführung in die Informatik", Teil 2, Karl Hanser Verlag, München, Wien 1980, Seiten 289-291, Verf.: Koch/Rembold/Ehlers).

Bei der Übertragung von Informationen zwischen räumlich verteilt angeordneten Busstationen kommt es zu Laufzeitverzögerungen. Diese Laufzeitverzögerungen kommen u.a. durch interne Verzögerungen der Sende- und Empfangsbausteine, durch Filter und durch die endliche Signallaufzeit der Übertragungsleitung zustande. Beginnt beziehungsweise beginnen nun eine oder mehrere Busstationen mit der Übertragung von Informationen, so synchronisieren sich alle anderen Busstationen auf den Anfang der Übertragung. Diesen Anfang erkennen Sie aber in Bezug auf die sendende Busstation erst mit einer gewissen Verzögerung. Am Ende der Informationsübergabe muß die empfangende Busstation den korrekten Erhalt quittieren und wird spätestens zu diesem Zeitpunkt selbst zum Sender. Die eigentlich sendende Busstation, die aufgrund der Quittung entscheidet, daß die Übertragung fehlerfrei war, erhält somit wiederum erst mit einer gewissen Verzögerung diese Quittung. Aus der Sicht der sendenden Busstation ist somit das Quittungssignal um die doppelte Laufzeit zwischen der sendenden und der empfangenden Busstation verzögert. - Allgemein anerkannte Vorschriften zur Datenübertragung, insbesondere zur Datenübertragung in Kraftfahrzeugen, verlangen jedoch, daß das Quittungssignal bis zu einem festen Zeitpunkt, der auf den Beginn eines Bits bezogen ist, von der sendenden Busstation gelesen wird. Dieser Anfangszeitpunkt liegt in der Regel in der zweiten Hälfte eines Bits. um eine sichere Abfrage zu gewährleisten, muß daher die Zeit, die zwischen dem Bit-Anfangszeitpunkt und dem Abfragezeitpunkt vergeht, größer als die erwähnte doppelte Laufzeit sein. Die Einhaltung dieser Bedingung bereitet bei solchen Übertragungsstrecken Schwierigkeiten, bei denen die Laufzeiten in den Bereich der Dauer eines Bits kommen.

Zur Berücksichtigung von Laufzeitverzögerungen bei der Übertragung von Informationen in Datenverarbeitungsnetzwerken ist es bereits bekannt, den einzelnen Busstationen bei Inbetriebnahme des Netzwerkes eine Laufzeitkorrektur zuzuordnen, die der Entfernung der jeweiligen Busstation vom gemeinsamen Sternpunkt entspricht. Diese Laufzeitkorrektur besteht in einer der jeweiligen Busstation fest zugeordneten Verlängerung der Startphase der Informationsübertragung (EP-A-0 413 123).

Ausgehend von einem Verfahren mit den Merkmalen des Oberbegriffes des Patentanspruches liegt der Erfindung die Aufgabe zugrunde, zur Vermeidung von Datenkollisionen die Informationsübertragung an die Laufzeiten zwischen den verschiedenen Busstationen anzupassen.

Zur Lösung dieser Aufgabe ist gemäß der Erfindung vorgesehen, daß die jeweils sendende Busstation beim jeweiligen Beginn ihrer Informationsübertragung dadurch synchronisiert wird, daß die Startphase der Informationsübertragung bis zu jenem Zeitpunkt aufrechterhalten wird, zu dem das Empfangsteil der sendenden Busstation über die Busleitung die Startflanke aus der eigenen Startphase oder aus der Startphase einer anderen Busstation erhält.

Mit einer derartigen Maßnahme ist erreicht, daß alle an der Informationsübertragung beteiligten Busstationen, also auch die jeweils sendende Busstation, auf einen bestimmten gemeinsamen Zeitpunkt synchronisiert sind, so daß die Abfragezeitpunkte für einzelne Bits im Empfangsteil einer Bus-Station mit Sicherheit innerhalb der jeweiligen Bitlänge liegen. Geht man in diesem Zusammenhang von einem Multiplexsystem aus, das Informationen in einer bestimmten Bitfolge überträgt, so gibt die sendende Busstation hierzu ihr erstes Bit verlängert aus und startet ihren Bitzyklus erst, wenn ihr Empfangsteil die Startflanke des ausgegebenen Bits selbst gelesen hat. Mit dieser Maßnahme verlängert sich das Startbit um die Laufzeit der Übertragungsstrecke. Man erreicht hierdurch, daß alle an den Datenbus angeschlossenen Busstationen nahezu gleichzeitig den Beginn der Übertragung detektieren. In gleicher Weise kann bei Multiplexsystemen vorgegangen werden, bei denen zum Beginn einer Informationsübertragung eine bestimmte Bitfolge oder ein bestimmter Zustand des Datenbus erwartet wird.

Die gemäß der Erfindung vorgesehene Synchronisation der Busstationen ergbit sich auch dann, wenn die sendende Busstation während der Zeitspanne, in der ihr Empfangsteil auf die Startflanke des ersten ausgesendeten Bits wartet, die Startflanke des Startbits einer anderen Busstation empfängt. In diesem Fall wird die sendende Busstation in gleicher Weise wie alle anderen Busstationen auf den Zeitpunkt des Erhaltes der Startflanke des Startbits der anderen sendenden Busstation synchronisiert.

Die gemäß der Erfindung vorgesehene Synchronisation der sendenden Busstation kann beispielsweise im Bereich der Hardware durch die Rücksetzung des Zeitzählers für die Bitausgabe der sendenden Busstation oder auch durch Software realisiert werden.

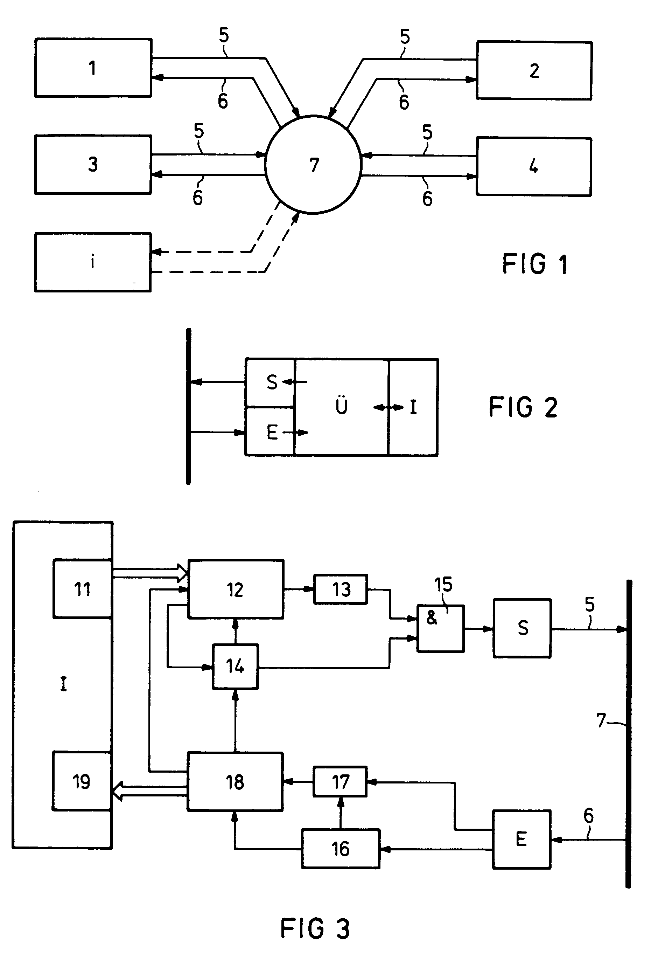

In den Figuren 1 bis 3 sind der prinzipielle Aufbau eines Multiplexsystems und der Ablaufplan einer gemäß der Erfindung ausgebildeten sendersynchronisierten Multiplexübertragung dargestellt. Anhand des Ablaufplanes wird das Verfahren gemäß der Erfindung näher erläutert.

Gemäß Figur 1 besteht das Multiplexübertragungssystem aus vier Multiplexstationen 1 bis 4 und gegebenenfalls weiteren Busstationen i, die über Busleitungen 5/6 und eine Verknüpfungsebene 7 miteinander verbunden sind und hierüber Informationen austauschen können. Beispielsweise können die Busleitungen 5/6 aus Kunststoff-Lichtwellenleitern bestehen; bei der Verknüpfungsebene kann es sich um einen passiven oder aktiven Sternkoppler handeln.

Gemäß Figur 2 enthält jede Busstation einen informationsverarbeitenden Teil I, eine Übertragungssteuerung Ü, ein sendeseitiges Ankoppelteil S zur Ankopplung der Busstation an das Übertragungsmedium und ein empfangsseitiges Ankoppelteil E.

Die im Rahmen des Multiplexsystems auszutauschenden Informationen bestehen aus einer bestimmten Folge von Bits und werden von einer oder mehreren Busstationen über den als Übertragungsmedium vorgesehenen optischen Bus übertragen. Von jeder Busstation wird der zu bestimmten Bitzeiten gültige Buszustand gelesen. Hierbei kommt es darauf an, daß bei der Überlagerung und/oder Verknüpfung von Bits verschiedener Busstationen der aktuelle Zustand der Bits erfaßt wird; dies setzt voraus, daß der Zeitpunkt zur Abfrage eines Bits in jeder Station richtig gesetzt ist. Die korrekte Bitabfrage ist beispielsweise zur Prioritätssteuerung oder bei der Quittungsgebung erforderlich. Sie wird jedoch dadurch erschwert, daß die Übertragung dieser Bits mit Laufzeiten behaftet ist. Solche Laufzeiten entstehen in der Übertragungssteuerung jeder Busstation, in der sendeseitigen elektrisch/optischen Ankopplung, auf der eigentlichen Übertragungsstrecke, in der Verknüpfungsebene und in der empfangsseitigen optisch/elektrischen Ankopplung. Die Summierung dieser Laufzeiten führt beispielsweise dazu, daß das Quittungsbit einer empfangenden Busstation von der sendenden Busstation erst zu einem Zeitpunkt verbucht werden kann, der um die doppelte Laufzeit zwischen der sendenden und der empfangenden Busstation verzögert ist. Derartige Laufzeiten können ohne weiteres bei etwa 400 ns liegen, so daß bei einer Bitdauer von 1000 ns eine Laufzeitverschiebung von etwa 800 ns auftreten kann. Diese Verschiebung beträgt mehr als 2/3 der Bitlänge und ist für eine geforderte hohe Übertragungsrate nicht mehr tragbar, weil ein aktueller Bitzustand dann nicht mehr sicher erfaßt werden kann.

Wird dagegen das gemäß Figur 1 aufgebaute Multiplexübertragungssystem mit einer gemäß der Erfindung ausgebildeten Synchronisation versehen, so findet der Informationsaustausch gemäß dem in Figur 3 dargestellten Ablaufplan statt. In diesem Ablaufplan sind einzelne Funktionsbausteine einer Busstation und deren funktionelle Zuordnung besonders herausgestellt.

Der informationsverarbeitende Teil I einer Busstation will Daten an andere Busstationen übergeben. Hierzu werden die Daten von einem Ausgabeglied 11 zunächst an eine Übertragungssteuerung 12 gegeben; diese steuert den Sendeablauf der Information in der Weise, daß beispielsweise jeweils fünf Datenbits zwischen einem Startbit und drei Prioritätsbits einerseits und einem Stopbit andererseits eingebettet sind. Die Übertragungssteuerung 12 gibt dann die für die Übertragung aufbereiteten Daten über einen aktuellen Bitspeicher 13 auf ein UND-Glied 15. Parallel dazu bekommt ein erstes Zeitsteuerglied 14 das Signal, daß ein Bit zur Übertragung vorliegt. Das erste Zeitsteuerglied 14 gibt dann ein Signal auf das UND-Glied 15, wodurch die Busankopplung S freigegeben und die anstehende Information über den Lichtwellenleiter 5 auf den als Sternkoppler ausgebildeten Datenbus 7 gegeben wird. Gleichzeitig trägt das erste Steuerglied 14 gegen Ende der Bitzeit der Übertragungssteuerung 12 auf, ein neues Bit auszugeben.

Im empfangsseitigen Teil der Busstation, der über die Busleitung 6 und das Ankoppelglied E an den Sternkoppler 7 angekoppelt ist, beginnt ein zweites Zeitsteuerglied 16 beim Erhalt der Flanke eines hoch zu niedrig priorisierten Bits zu zählen. Von dem zweiten Zeitsteuerglied 16 erhält ein Busabfrageglied 17, das den aktuellen Buszustand zu einer Empfangssteuerung 18 zu übergeben hat, den Abtastzeitpunkt der Bitabfrage. Außerdem wird die Empfangssteuerung 18 von dem zweiten Zeitsteuerglied 16 über das Eintreffen einer neuen Information unterrichtet. Das Eintreffen der neuen Information löst in der Empfangssteuerung 18 einen Steuerimpuls aus, der auf das erste Zeitsteuerglied 14 gegeben wird und dort das gemäß der Erfindung vorgesehene Rücksetzen der sendeseitigen Übertragungssteuerung 12 bewirkt.

Im weiteren Verlauf der Informationsübertragung wird die sendeseitige Übertragungssteuerung 12 davon unterrichtet, ob gegebenenfalls von einer anderen Busstation eine höher priorisierte Information gesendet wird und ob diese Information richtig empfangen wurde. Trifft dies zu, so wird ein Quittungsbit gesendet. - Die richtig empfangenen Daten werden an ein Ausgabeglied 19 des informationsverarbeitenden Teils I zur weiteren Verarbeitung übergeben.

## Patentansprüche

1. Verfahren zum Betrieb einer Multiplexsteuerung für das aus einer Busleitung (7) und aus mehreren an die Busleitung angeschlossenen Busstationen (1,2,3,4,...i...) mit nachgeordneten peripheren Endeinrichtungen bestehende Bordnetz eines Kraftfahrzeuges,
bei dem in jeder Busstation nach einem bestimmten Muster formierte, in einer Startphase eine Startinformation aufweisende Informationen verarbeitet und zur Übertragung aufbereitet werden, bei dem von jeder Busstation Informationen auf die Busleitung gesendet und von dort empfangen werden und bei dem im Falle des Sendens die sendende Busstation (1) von den jeweils empfangenden Busstationen (2,3,4) eine Quittung für die erfolgte Übertragung empfängt,
**dadurch gekennzeichnet,**
daß die jeweils sendende Busstation (1) beim jeweiligen Beginn ihrer Informationsübertragung dadurch synchronisiert wird, daß die Startphase der Informationsübertragung bis zu jenem Zeitpunkt aufrechterhalten
wird, zu dem das Empfangsteil (E) der sendenden Busstation (1) über die Busleitung (7) die Startflanke aus der eigenen Startphase oder aus der Startphase einer anderen Busstation (2,3,4) erhält.

## Claims

1. Method for the operation of a multiplex control for the on-board network of a motor vehicle, said network consisting of a bus line (7) and of several bus stations (1,2,3,4,...i...) which are connected to the bus line and have downstream peripheral terminal equipment, wherein in each bus station items of information formed in accordance with a certain pattern and having an item of start information in a start phase are processed and edited for the purposes of transmission, wherein items of information are transmitted from each bus station to the bus line and are received from there and wherein in the case of the transmission the transmitting bus station (1) receives from the respective receiving bus stations (2,3,4) an acknowledgement of the transmission which has occurred, characterised in that the respective bus station (1) which is transmitting is synchronized at the respective start of its information transmission by maintaining the start phase of the information transmission until that time at which the receiving portion (E) of the transmitting bus station (1) by way of the bus line (7) obtains the start edge from its own start phase or from the start phase of another bus station (2,3,4).

## Revendications

1. Procédé pour faire fonctionner une commande de multiplexage du réseau de bord d'un véhicule automobile, ce réseau étant constitué d'une ligne (7) de bus et de plusieurs stations (1, 2, 3, 4, ... i ...) de bus, qui sont connectées à la ligne de bus et en aval desquelles les équipements terminaux périphériques sont disposés,
dans lequel on traite des informations, formatées suivant un motif déterminé et comportant dans une phase de départ une information de départ, dans chaque station de bus et on les prépare à la transmission, dans lequel des informations sont émises par chaque station de bus sur la ligne de bus et en sont reçues et dans lequel, dans le cas de l'émission, la station (1) de bus émettrice reçoit des stations (2, 3, 4) de bus réceptrices un accusé de réception pour la transmission effectuée,
caractérisé en ce que
on synchronise la station (1) émettrice de bus au début de sa transmission d'informations en maintenant la phase de départ de la transmission d'informations jusqu'à l'instant, auquel la partie (E) réceptrice de la station (1) de bus émettrice reçoit par l'intermédiaire de la ligne (7) de bus le flanc de départ provenant de sa propre phase de départ ou provenant de la phase de départ d'une autre station (2, 3, 4) de bus.
